# EUROPEAN PATENT APPLICATION

(11) **EP 4 755 677 A1**
(43) Date of publication of application: **10.06.2026**
(21) Application number: 24849246.4
(22) Date of filing: 01.08.2024
(51) Int. Cl.: B60J 1/02, B60J 1/00, C03C 27/12

(54) **WINDSHIELD**

(30) Priority: 02.08.2023 JP 2023126634
(71) Applicant: Nippon Sheet Glass Company, Limited, Tokyo 108-6321 (JP)
(72) Inventor: CHIBA, Kazuki, Tokyo 108-6321 (JP); KIJIMA, Yoshifumi, Tokyo 108-6321 (JP); ONO, Kazuhisa, Tokyo 108-6321 (JP); ASAOKA, Hisashi, Tokyo 108-6321 (JP)
(74) Representative: Fortt, Simon Merton
(86) International application number: PCT/JP2024/027496
(87) International publication number: WO 2025/028601

(57) **Abstract**

The present invention is a windshield on which at least information pertaining to an automobile is projected by light emitted from a head-up display device. The windshield is provided with: an outer glass plate; an inner glass plate that faces the outer glass plate; an intermediate film that bonds the inner glass plate and the outer glass plate; a first shield layer that is disposed at the peripheral edge of at least one of the outer glass plate and the inner glass plate; and a second shield layer which is disposed in a region on the inner side of the first shield layer, in at least one of the outer glass plate and the inner glass plate, and on which the information pertaining to the automobile is projected.

## Description

### Technical Field

The present invention relates to a windshield on which at least information pertaining to an automobile is projected by light emitted from a head-up display device (HUD device).

### Background Art

PTL 1 discloses a windshield on which light from an HUD device is projected and various pieces of information pertaining to an automobile are displayed.

### Citation List

### Patent Literature

PTL 1: JP 2014-24752 A

### Summary of Invention

### Technical Problem

As described above, an image projected on the windshield includes information, such as speed display, which has to be visually recognized at all times by a driver. However, in the windshield, since light from the outside of the vehicle is also transmitted through an area where the projected image is displayed, there is a problem in that it is difficult to visually recognize the projected image by the light from the outside of the vehicle. The present invention has been made to solve this problem, and an object thereof is to provide a windshield that can make an image projected on the windshield by an HUD device less susceptible to light from the outside of a vehicle.

### Solution to Problem

Item 1. A windshield on which at least information pertaining to an automobile is projected by light emitted from a head-up display device, the windshield including:
an outer glass plate;
an inner glass plate facing the outer glass plate;
an intermediate film bonding the inner glass plate and the outer glass plate;
a first shield layer disposed at a peripheral edge of at least one of the outer glass plate and the inner glass plate; and
a second shield layer disposed in an area on an inner side of the first shield layer, in at least one of the outer glass plate and the inner glass plate, the information pertaining to the automobile being projected on the second shield layer.

Item 2. The windshield according to item 1, wherein
an upper end of the second shield layer is disposed
below a reduced test area B defined in JIS R3212 (2021) JA.1.1.4b or
below a position of 25 mm from a lower end of an enlarged test area B defined in JIS R3212 (2021) JA.1.1.4b.

Item 3. The windshield according to item 1, wherein
the first shield layer is disposed at least on a surface on a vehicle interior side of the inner glass plate out of a surface on the vehicle interior side of the outer glass plate and the surface on the vehicle interior side of the inner glass plate, and
the second shield layer is disposed at least on a surface other than the surface on the vehicle interior side of the inner glass plate.
Item 4. The windshield according to item 1, wherein
   the first shield layer is disposed at least on a surface on the vehicle interior side of the inner glass plate out of a surface on the vehicle interior side of the outer glass plate and the surface on the vehicle interior side of the inner glass plate, and
   the first shield layer is disposed at least on a plane which is same as the surface on which the second shield layer is disposed.
Item 5. The windshield according to item 4, wherein the first shield layer and the second shield layer are connected.
Item 6. The windshield according to item 1 or 2, wherein the second shield layer is disposed on a surface on the vehicle interior side of the outer glass plate.
Item 7. The windshield according to item 6, wherein a reflective film is disposed on a surface on the vehicle interior side of the inner glass plate.
Item 8. The windshield according to item 7, wherein a difference between a refractive index of the inner glass plate and a refractive index of the intermediate film overlapping the second shield layer is larger than a difference between a refractive index of the intermediate film overlapping the second shield layer and a refractive index of the second shield layer.
Item 9. The windshield according to item 7, wherein the reflective film covers a part of the first shield layer.
Item 10. The windshield according to item 1 or 2, wherein the information pertaining to an automobile includes at least one of a speedometer and an odometer.
Item 11. The windshield according to item 1 or 2, wherein the second shield layer is disposed on a lower side when the windshield is attached to a vehicle.
Item 12. The windshield according to item 1 or 2, wherein the light is P-polarized light.
Item 13. The windshield according to item 12, wherein one or more reflective films are disposed on a surface on the vehicle interior side of the inner glass plate, and
   when an incident angle of the light emitted from the head-up display device is larger than a Brewster's angle in the inner glass plate, a refractive index of an outermost surface layer of the reflective film is smaller than a refractive index of the inner glass plate.
Item 14. The windshield according to item 12, wherein one or more reflective films are disposed on a surface on the vehicle interior side of the inner glass plate, and
   when an incident angle of the light emitted from the head-up display device is smaller than a Brewster's angle in the inner glass plate, a refractive index of an outermost surface layer of the reflective film is larger than a refractive index of the inner glass plate.
Item 15. The windshield according to item 1 or 2, wherein an irradiation area to be irradiated with light from a second head-up display device is provided, the light being projected onto an area in which the first shield layer and the second shield layer are not provided and on which external light is transmitted and incident.
Item 16. The windshield according to item 15, wherein a reflectance of the irradiation area is smaller than a reflectance of an area in which the first shield layer and the second shield layer are provided, on the vehicle interior side of the inner glass plate.
Item 17. The windshield according to item 1 or 2, wherein
   the second shield layer is formed on a surface on the vehicle interior side of the outer glass plate or a surface on a vehicle exterior side of the inner glass plate, and
   glossiness of the second shield layer is lower than glossiness of the first shield layer.

### Advantageous Effects of Invention

According to the present invention, it is possible to make an image projected on the windshield by an HUD device less susceptible to light from the outside of a vehicle.

### Brief Description of Drawings

[Fig. 1] Fig. 1 is a front view of a windshield according to an embodiment of the present invention.
[Fig. 2] Fig. 2 is a cross-sectional view of Fig. 1.
[Fig. 3] Fig. 3 is a cross-sectional view of a laminated glass.
[Fig. 4] Fig. 4 is a cross-sectional view illustrating projection of an image by an HUD device.
[Fig. 5] Fig. 5 is a block diagram of an image processing device.
[Fig. 6] Fig. 6 is a cross-sectional view of a windshield provided with a reflective film.
[Fig. 7] Fig. 7 is a graph showing a relationship between an incident angle and a reflectance.
[Fig. 8] Fig. 8 is a cross-sectional view illustrating projection of an image by an AR-HUD device.
[Fig. 9] Fig. 9 is a front view of the windshield on which an image is projected by an AR-HUD device.

### Description of Embodiments

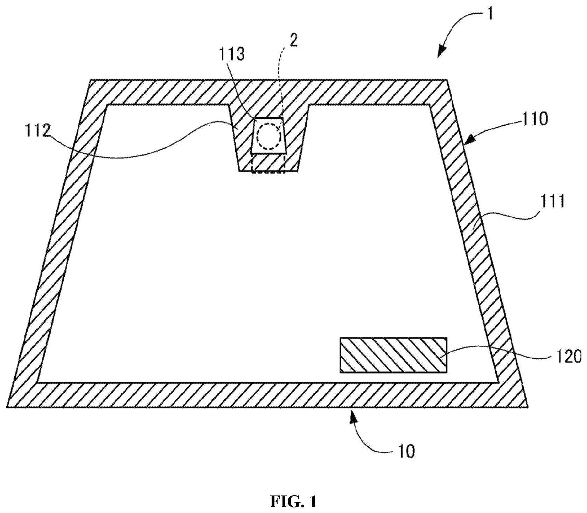

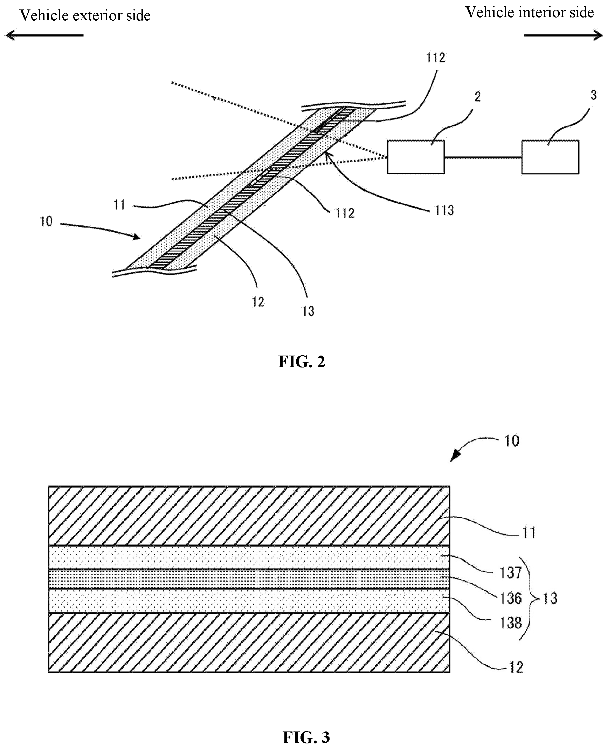

Hereinafter, an embodiment of a windshield of the present invention will be described with reference to the drawings. Fig. 1 is a plan view of a windshield, and Fig. 2 is a cross-sectional view of Fig. 1. Note that, for convenience of description, the up-down direction in Fig. 1 will be referred to as "upper and lower", "perpendicular", and "vertical", and the right-left direction in Fig. 1 will be referred to as "horizontal". Fig. 1 illustrates a windshield viewed from a vehicle interior side. That is, the near side of the sheet of Fig. 1 is the vehicle interior side, and the far side of the sheet of Fig. 1 is a vehicle exterior side.

As illustrated in Figs. 1 and 2, a windshield 1 includes a substantially rectangular laminated glass 10 and is installed in a vehicle body in an inclined state. A first shield layer 110 and a second shield layer 120 that shield the field of view from the outside of the vehicle are laminated on the laminated glass 10. An imaging device 2 in which a camera for imaging a situation outside the vehicle is built is attached to the first shield layer 110 via a bracket (not illustrated). The first shield layer 110 is provided with an imaging window 113 at a position corresponding to the imaging device 2, and the imaging device 2 can image the situation outside the vehicle through the imaging window 113.

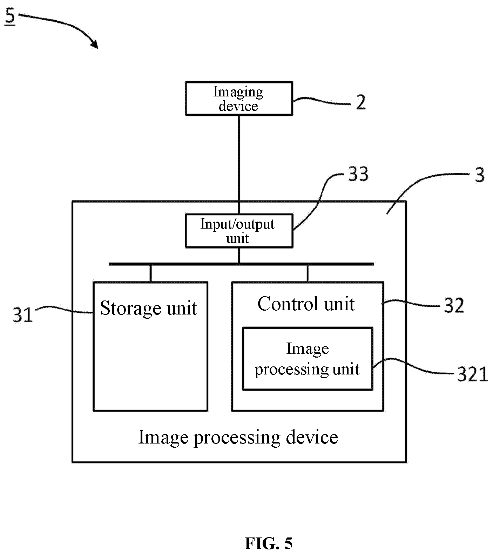

An image processing device 3 is connected to the imaging device 2, and a captured image acquired by the imaging device 2 is processed by the image processing device 3. The imaging device 2 and the image processing device 3 constitute an in-vehicle system 5 (see Fig. 5), and the in-vehicle system 5 can provide various pieces of information to an occupant in accordance with the processing of the image processing device 3.

A head-up display device (hereinafter, referred to as an HUD device) 500 is provided in the vehicle. The HUD device 500 irradiates the windshield with image light of a vehicle speed, other characters, and figures, and the like in order to project information such as the vehicle speed.

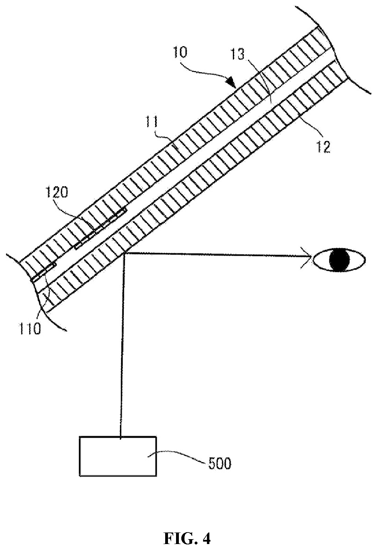

As illustrated in Fig. 4 described later, the second shield layer 120 is disposed in an area irradiated with light from the HUD device 500. Each component will be described below.

### <1. Laminated Glass>

### <1-1. Glass Plate>

First, an outer glass plate 11 and an inner glass plate 12 will be described. Known glass plates can be used as the outer glass plate 11 and the inner glass plate 12, and these glass plates can be formed of heat-ray absorbing glass, regular clear glass, green glass, dark green glass, or UV green glass. However, these glass plates 11 and 12 need to realize visible light transmittance that conforms to the safety standards of a country in which an automobile is used. For example, adjustments can be made so that the outer glass plate 11 ensures a required solar absorptance and the inner glass plate 12 provides visible light transmittance that meets safety standards. Hereinafter, examples of clear glass, heat-ray absorbing glass, and soda lime-based glass will be described.

### (Clear Glass)

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) in terms of Fe₂O₃: 0.08 to 0.14 mass%

### (Heat-Ray Absorbing Glass)

As for the composition of the heat-ray absorbing glass, for example, a composition obtained, which is based on the composition of clear glass, by setting the ratio of the total iron oxide (T-Fe₂O₃) in terms of Fe₂O₃ to 0.4 to 1.3 mass%, the ratio of CeO₂ to 0 to 2 mass%, the ratio of TiO₂ to 0 to 0.5 mass%, and reducing the components (mainly SiO₂ and Al₂O₃) of the framework of glass by an amount corresponding to the increases in T-Fe₂O₃, CeO₂, and TiO₂ can be used.

### (Soda Lime-Based Glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

### (Green Glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.4 to 0.6 mass%

### (Dark Green Glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.7 to 1.3 mass%

In each of the glass plates 11 and 12, the visible light transmittance can also be adjusted. For this purpose, for example, the glass plates 11 and 12 are colored by adjusting the content of Fe₂O₃, whereby the visible light transmittance can be adjusted. For example, when the content of Fe₂O₃ increases, the glass plate is colored green, and the green glass or the dark green glass described above is obtained. On the other hand, when the content of Fe₂O₃ is small, the clear glass described above is obtained.

The thickness of the laminated glass 10 according to the present embodiment is not particularly limited, but the total thickness of the outer glass plate 11 and the inner glass plate 12 can be, for example, 2.1 to 6 mm, and from the viewpoint of weight reduction, the total thickness of the outer glass plate 11 and the inner glass plate 12 is preferably 2.4 to 3.8 mm, further preferably 2.6 to 3.4 mm, and particularly preferably 2.7 to 3.2 mm.

The outer glass plate 11 is mainly required to have durability and impact resistance against external obstacles, and as a windshield of an automobile, the outer glass plate 11 is required to have impact resistance against a flying object such as a pebble. On the other hand, as the thickness increases, the weight increases, which is not preferable. From this viewpoint, the thickness of the outer glass plate 11 is preferably 1.8 to 2.3 mm and further preferably 1.9 to 2.1 mm. The thickness to adopt may be determined according to the application of glass.

The thickness of the inner glass plate 12 can be made equal to that of the outer glass plate 11, but for example, the thickness of the inner glass plate 12 can be made smaller than that of the outer glass plate 11 in order to reduce the weight of the laminated glass 10. Specifically, in consideration of the strength of glass, the thickness is preferably 0.6 to 2.0 mm, further preferably 0.8 to 1.6 mm, and particularly preferably 1.0 to 1.4 mm. Furthermore, the thickness is preferably 0.8 to 1.3 mm. The thickness of each of the glass plates 11 and 12 to adopt will be described later.

As will be described in detail later, the laminated glass 10 is curved so as to protrude toward the vehicle exterior side, but in this case, the thickness is measured at two positions above and below a center line extending in the up-down direction at the center of the laminated glass 10 in the right-left direction. The measuring instrument is not particularly limited, but for example, a thickness gauge such as SM-112 manufactured by TECLOCK Co., Ltd. can be used. At the time of measurement, the laminated glass 10 is disposed in such a manner that the curved surface of the laminated glass 10 is placed on a flat surface, and an end of the laminated glass 10 is sandwiched and measured by the thickness gauge.

### <1-2. Intermediate Film>

Fig. 3 is an example of an intermediate film. As illustrated in Fig. 3, an intermediate film 13 can be configured by three layers in which a soft core layer 136 is sandwiched between a pair of outer layers 137 and 138 harder than the soft core layer. However, the intermediate film is not limited to this configuration, and may be formed of a plurality of layers including the core layer 136 and at least one outer layer disposed on the outer glass plate 11 side.

The hardness of the core layer 136 is not particularly limited as long as it is softer than the outer layers 137 and 138. The material constituting each of the layers 136 to 138 is not particularly limited, but for example, a material can be selected on the basis of Young's modulus. Specifically, the Young's modulus of the core layer 136 is preferably 1 to 20 MPa, further preferably 1 to 18 MPa, and particularly preferably 1 to 14 MPa at a frequency of 100 Hz and a temperature of 20 degrees. Within such a range, it is possible to prevent a decrease in the sound transmission loss (STL) in a low frequency range of approximately 3500 Hz or less. On the other hand, the Young's modulus of the outer layers 137 and 138 is preferably large in order to improve the sound insulation performance in a high frequency range, and can be 560 MPa or more, 600 MPa or more, 650 MPa or more, 700 MPa or more, 750 MPa or more, 880 MPa or more, or 1300 MPa or more at a frequency of 100 Hz and a temperature of 20 degrees. The upper limit of the Young's modulus of the outer layer 522 is not particularly limited, but can be set, for example, from the viewpoint of processability. For example, it is empirically known that when the Young's modulus is 1750 MPa or more, processability, particularly cutting becomes difficult.

As a specific material, the outer layers 137 and 138 can be made of, for example, polyvinyl butyral resin (PVB). The polyvinyl butyral resin is preferable because it is excellent in adhesiveness to the outer glass plate 11 and penetration resistance. On the other hand, the core layer 136 can be made of, for example, ethylene vinyl acetate resin (EVA) or polyvinyl acetal resin softer than the polyvinyl butyral resin constituting the outer layer. By sandwiching the soft core layer therebetween, the sound insulation performance can be greatly improved while maintaining the same adhesiveness and penetration resistance as those of a single-layered resin intermediate film.

The thickness of the core layer 136 is not particularly limited, but is, for example, preferably 0.1 to 2.0 mm and further preferably 0.1 to 0.6 mm. On the other hand, the thickness of each of the outer layers 137 and 138 is not particularly limited, but is, for example, preferably 0.1 to 2.0 mm and further preferably 0.1 to 1.0 mm.

However, the intermediate film 13 described above is an example, and can be formed of one layer or can include various functional layers such as a heat reflecting film and an ultraviolet absorbing film.

### <2. First Shield Layer>

Next, the first shield layer 110 will be described. As illustrated in Figs. 1 and 2, in the present embodiment, the first shield layer 110 is formed along the peripheral edge of the laminated glass 10 on the surface on the vehicle interior side of the outer glass plate 11 and on the vehicle interior side of the inner glass plate 12. Specifically, as illustrated in Fig. 1, the first shield layer 110 can be divided into a peripheral edge area 111 along the peripheral edge of the laminated glass 10 and a protruding area 112 protruding downward in a rectangular shape from an upper side portion of the laminated glass 10. The peripheral edge area 111 shields incidence of light from a peripheral edge of the windshield. On the other hand, the protruding area 112 makes the imaging device 2 disposed in the vehicle invisible from the outside of the vehicle.

However, when the first shield layer 110 shields the imaging range of the imaging device 2, the imaging device 2 cannot image the situation in front of and outside the vehicle. Therefore, in the present embodiment, the imaging window 113 having a rectangular shape is provided at a position corresponding to the imaging device 2 in the protruding area 112 of the first shield layer 110 so that the imaging device 2 can image the situation outside the vehicle.

Note that the first shield layer 110 may be laminated on at least one of the surface on the vehicle interior side of the outer glass plate 11 and the surface on the vehicle exterior side of the inner glass plate 12.

Next, the material of the first shield layer 110 will be described. The material of the first shield layer 110 may be appropriately selected according to the embodiment as long as it can shield the field of view from the outside of the vehicle, and for example, a dark color ceramic such as black, brown, gray, and deep blue may be used.

When black ceramics is selected as the material of the first shield layer 110, for example, black ceramics is laminated on the peripheral edge on the surface on the vehicle interior side of the inner glass plate 12 by screen printing or the like, and the laminated ceramic is heated together with the outer glass plate 11 and the inner glass plate 12. Thus, the first shield layer 110 can be formed on the peripheral edges of the outer glass plate 11 and the inner glass plate 12. When the black ceramic is printed, an area where the black ceramic is not printed is partially provided. Thus, the imaging window 113 can be formed. Note that various materials can be used as the ceramic used for the first shield layer 110. For example, a ceramic having a composition shown in Table 1 below can be used for the first shield layer 110.

**[Table 1]**

| | | First and second colored ceramic pastes |
|---|---|---|
| Pigment* 1 | mass% | 10 |
| Resin (cellulose resin) | mass% | 10 |
| Organic solvent (pine oil) | mass% | 10 |
| Glass binder*2 | mass% | 70 |
| Viscosity | dPs | 150 |

| | | |
|---|---|---|
| *1, Main component: Copper oxide, chromium oxide, iron oxide, and manganese oxide *2, Main component: Bismuth borosilicate and zinc borosilicate | | |

### <3. Second Shield Layer>

The second shield layer 120 is disposed in an area irradiated with light from the HUD device 500. Specifically, as illustrated in Fig. 4, the second shield layer 120 is disposed on the surface on the vehicle interior side of the outer glass plate 11. The HUD device 500 is disposed inside or on an upper surface of a dashboard of an automobile, irradiates the second shield layer 120 with light, and projects information pertaining to the automobile on the windshield. The information pertaining to the automobile may be various pieces of information such as a speedometer or odometer prescribed in Article 46 of the Road Transportation Vehicle Safety Standards, and in addition, for example, a tachometer, a fuel meter, a water temperature gauge, and a warning light. Note that, in Fig. 4, the light from the HUD device 500 is described to be reflected only on the vehicle interior side of the inner glass plate 12, but in practice, the light is also reflected on the surface on the vehicle exterior side of the inner glass plate 12 and the surface on the vehicle interior side of the second shield layer 120.

In particular, the speedometer or odometer prescribed in Article 46 of the Vehicle Safety Standards is required to be easily confirmed by a driver. When the light from the outside of the vehicle overlaps with the light from the HUD device 500, the light is affected by a change in brightness of the external environment, and there is a possibility that the driver cannot easily confirm the image from the HUD device 500. From the above, the second shield layer 120 is required to shield visible light from the outside. By reducing at least one of ultraviolet transmittance (ISO9050) and solar transmittance (JISR3106) of the second shield layer 120, it is possible to suppress deterioration of the planar light source of the HUD device 500 due to ultraviolet rays and heat incident from the outside of the vehicle into the vehicle via the second shield layer 120.

When an image of light emitted from the HUD device 500 (hereinafter, referred to as an HUD image) is projected onto an area through which light from the outside passes, the light reflected by projecting the HUD image onto the windshield overlaps with the light from the outside. Therefore, in order to improve the visibility of the HUD image, it is necessary to set the intensity of the emitted light to be stronger than the intensity of light from the outside. When the same area of the windshield is continuously irradiated with such strong light, the windshield may be discolored. Therefore, it is desirable to project information (HUD image) to be displayed in the same area for a long time on the second shield layer 120. In particular, when the HUD image is projected on the second shield layer 120, it is not necessary to consider light from the outside, so that the illuminance can be reduced. As a result, discoloration of the windshield can be suppressed.

The second shield layer 120 can be formed of the same material as the first shield layer 110. Similarly to the first shield layer 110, the second shield layer 120 can be laminated on at least one of the surface on the vehicle interior side of the outer glass plate 11, the surface of the vehicle exterior side of the inner glass plate 12, and the vehicle interior side of the inner glass plate 12.

The position of the second shield layer 120 in the right-left direction is disposed in front of the driver in the windshield. For example, when the vehicle is driven from the right-hand side, the second shield layer 120 is disposed on the right side of the windshield as viewed from the driver. The position of the second shield layer 120 in the up-down direction is disposed, for example, at a position lower than the following (i) or (ii) so as not to disturb the field of view in front of the driver.
(i) Below the lower end of the "reduced test area B" defined in JIS R3212 (2021) JA.1.1.4b
(ii) Below the position of 25 mm from the lower end of the "enlarged test area B" defined in JIS R3212 (2021) JA.1.1.4b

That is, the second shield layer 120 is provided at a lower portion of the windshield.

The shape of the second shield layer 120 is not particularly limited, but may be any shape as long as it can easily display information, and can be various shapes such as a rectangular shape, a polygonal shape, a circular shape, an elliptical shape, and an irregular shape.

### <4. In-Vehicle System>

Next, the in-vehicle system 5 including the imaging device 2 and the image processing device 3 will be described with reference to Fig. 5. Fig. 5 illustrates a configuration of the in-vehicle system 5. As illustrated in Fig. 5, the in-vehicle system 5 according to the present embodiment includes the imaging device 2 and the image processing device 3 connected to the imaging device 2.

The image processing device 3 is a device that processes a captured image acquired by the imaging device 2. This image processing device 3 includes, for example, a general hardware such as a storage unit 31, a control unit 32, and an input/output unit 33 that are connected via a bus, as a hardware configuration. However, the hardware configuration of the image processing device 3 is not limited to such an example, and regarding a specific hardware configuration of the image processing device 3, it is possible to add, or omit and add constituent elements as appropriate according to an embodiment.

The storage unit 31 stores various pieces of data and programs used in processing executed by the control unit 32 (not illustrated). The storage unit 31 may be realized by, for example, a hard disk, or a recording medium such as a USB memory. Various pieces of data and programs stored in the storage unit 31 may be acquired from a recording medium such as a compact disc (CD) or a digital versatile disc (DVD). The storage unit 31 may be referred to as an auxiliary storage device.

As described above, the laminated glass 10 is disposed in an inclined posture with respect to the vertical direction and is curved. The imaging device 2 images a situation outside the vehicle via such a laminated glass 10. Therefore, the captured image acquired by the imaging device 2 is deformed according to the posture, shape, refractive index, optical defect, and the like of the laminated glass 10. Aberrations that are specific to the camera lens of the imaging device 2 also cause deformation. In view of this, the storage unit 31 may store correction data for correcting an image deformed due to the laminated glass 10 and aberrations of the camera lens.

The control unit 32 includes one or more processors such as a microprocessor or a central processing unit (CPU), and peripheral circuits (a read only memory (ROM), a random access memory (RAM), an interface circuit, and the like) used for processing performed by these processors. The ROM, the RAM, and the like may be referred to as the main storage devices in the sense that they are disposed in the address space handled by the processors in the control unit 32. The control unit 32 functions as an image processing unit 321 by executing various pieces of data and programs stored in the storage unit 31.

The image processing unit 321 processes the captured image acquired by the imaging device 2. The processing of the captured image can be appropriately selected according to the embodiment. For example, the image processing unit 321 may recognize a subject present in a captured image by analyzing the captured image through pattern matching or the like. In the present embodiment, since the imaging device 2 images the situation forward of the vehicle, the image processing unit 321 may further determine whether or not a living thing such as a human is captured in front of the vehicle on the basis of the subject recognition. When a person is in front of the vehicle, the image processing unit 321 may output a warning message, using a predetermined method.

The input/output unit 33 is one or more interfaces for transmitting and receiving data to/from a device that is present outside the image processing device 3.

As such an image processing device 3, in addition to a device designed exclusively for a provided service, a general-purpose device such as a personal computer (PC) or a tablet terminal may be used.

### <5. Properties>

In the windshield configured as described above, the following effects can be obtained.
(1) Since the second shield layer 120 is disposed so as to overlap a projection area of the HUD device 500, light from the outside of the vehicle can be shielded by the second shield layer 120, whereby it is possible to suppress that information from the HUD device 500 projected on the windshield becomes difficult to be seen due to light from the outside of the vehicle. That is, the projected information can be easily visually recognized regardless of the brightness outside the vehicle.

In particular, when speed display or the like defined in Article 46 of the Vehicle Safety Standards is displayed on an instrument panel as in the related art, since the speed display is visually recognized by at least one of a large movement of the line of sight and a change in the focal length, asthenopia or the like is likely to accumulate. Therefore, the HUD device 500 can reduce the asthenopia by displaying the speed display and the like on the windshield.

The information provided by light from the outside passing through the lower portion of the windshield is information on a position where a focal length is short and a distance to a hood or an object is short. On the other hand, information provided by light from the outside passing through the upper portion of the windshield may have a long focal length. Therefore, for example, when the second shield layer 120 is provided on the upper portion of the windshield, the focal length may be different from information obtained from light from the outside, and asthenopia or the like is likely to accumulate. Therefore, it is desirable that the second shield layer 120 is disposed at the lower portion of the windshield as in the present embodiment.

(2) Since irregularities may be formed on the surface of the second shield layer 120, for example, when the second shield layer 120 is disposed on the surface on the vehicle interior side of the inner glass plate 12, light from the HUD device 500 hardly passes through the second shield layer 120, and thus is reflected only by the second shield layer 120. Therefore, an image of light from the HUD device 500 may fluctuate. Therefore, in the present embodiment, the second shield layer 120 is disposed on the surface on the vehicle interior side of the outer glass plate 11 (can be disposed on a surface other than the vehicle interior side of the inner glass plate 12). As a result, the influence of the irregularities on the surface of the second shield layer 120 can be eliminated, and the occurrence of image fluctuation can be prevented. However, the second shield layer 120 may be disposed on the vehicle interior side of the inner glass plate.

(3) The light from the HUD device 500 may be a P-polarized wave. As a result, even when a driver wears polarization sunglasses, the driver can visually recognize the information projected on the windshield.

Since Article 46 of the Vehicle Safety Standards stipulates that a speedometer or an odometer can be easily checked regardless of whether a driver wears polarization sunglasses, it is desirable that information pertaining to the automobile projected on the windshield can be visually recognized. Therefore, the light from the HUD device 500 is desirably P-polarized light. For example, when the HUD device 500 projects information such as speed display only on the windshield without providing an instrument panel, the light from the HUD device 500 needs to be P-polarized light.

### <6. Modification>

Although an embodiment of the present invention has been described above, the present invention is not limited to the above embodiment, and various modifications can be made without departing from the gist thereof. Note that the following modifications can be appropriately combined.

<6-1>
As described in the above embodiment, when the second shield layer 120 is disposed on the surface on the vehicle interior side of the outer glass plate 11, the light from the HUD device 500 is reflected by the surface on the vehicle interior side of the inner glass plate 12, the surface on the vehicle exterior side of the inner glass plate 12 (surface on the vehicle interior side of the intermediate film 13), and the surface on the vehicle interior side of the second shield layer 120. Therefore, there is a possibility that deviation occurs in the projected information due to the reflected light (occurrence of deviation of the reflected image). Therefore, in order to suppress such deviation, the following measures can be taken.

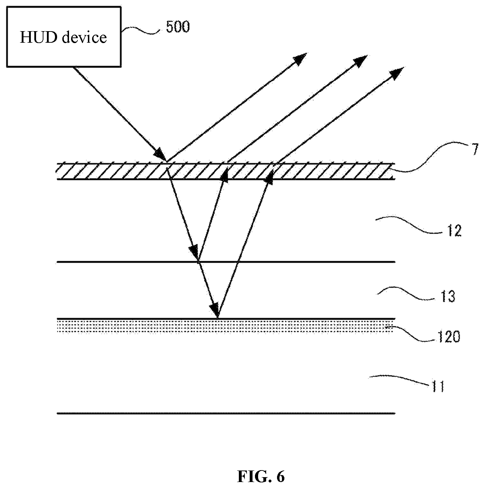

(1) As illustrated in Fig. 6, a transparent reflective film 7 is provided on the surface on the vehicle interior side of the inner glass plate 12. As a result, since light passing through the inner glass plate 12 is reduced, reflection on the surface on the vehicle interior side of the inner glass plate 12 and the surface on the vehicle interior side of the second shield layer 120 is reduced. As a result, it is possible to suppress the deviation of the reflected image from becoming apparent. When the light from the HUD device 500 is P-polarized light, the P-polarized light has a lower reflectance than S-polarized light, and thus a sufficient reflectance cannot be obtained by the windshield. Therefore, it is useful to provide the reflective film 7. As the reflective film 7, a known film can be used. The reflective film 7 may be composed of one layer or plural layers.
(2) A difference between a refractive index of the inner glass plate 12 and a refractive index of the intermediate film 13 overlapping the second shield layer 120 can be larger than a difference between a refractive index of the intermediate film 13 overlapping the second shield layer 120 and a refractive index of the second shield layer 120.

As a result, reflection of light on the surface on the vehicle interior side of the intermediate film 13 can be made larger than reflection of light on the surface on the vehicle interior side of the second shield layer 120. As a result, since the reflection of light on the surface on the vehicle interior side of the intermediate film 13 is reduced, the deviation of the reflected image can be reduced.

(3) When the incident angle of light with which the reflective film 7 including at least one or more layers is irradiated from the HUD device 500 is larger than the Brewster's angle at the interface between the inner glass plate 12 and the atmosphere, the reflectance on the outermost surface layer of the reflective film 7 can be increased by making the refractive index of the outermost surface layer of the reflective film 7 in contact with the atmosphere smaller than the refractive index of the inner glass plate 12. On the other hand, when the incident angle of light with which the reflective film 7 including at least one or more layers is irradiated from the HUD device 500 is smaller than the Brewster's angle at the interface between the inner glass plate 12 and the atmosphere, the reflectance on the outermost surface layer of the reflective film 7 can be increased by making the refractive index of the outermost surface layer of the reflective film 7 in contact with the atmosphere larger than the refractive index of the inner glass plate 12.

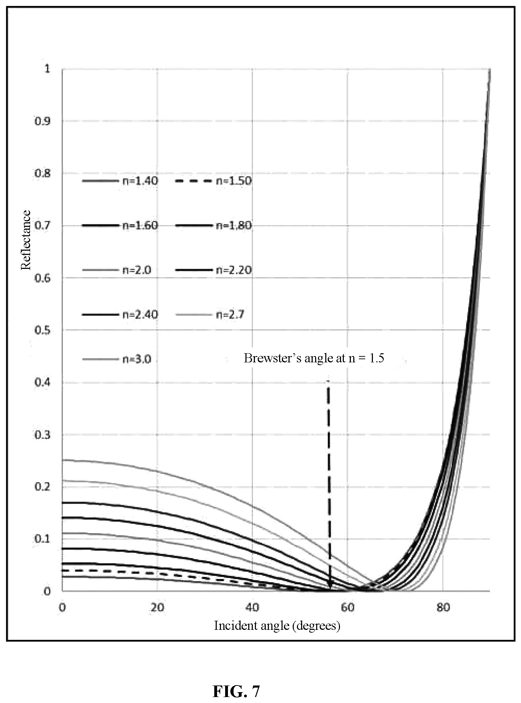

When the reflective film 7 is composed of plural layers, the reflectance thereof is a sum of values calculated at the respective interfaces by multiplying the transmittance of incident light at each interface by the reflectance at the interface. When the reflectance at the outermost surface can be increased, the amount of light incident on the next interface is reduced, so that the amount of light reflected at the interface is reduced when the reflectance is the same. Therefore, by increasing the reflectance on the outermost surface, the reflection can be strengthened even with the same number of layers, and the reflected image can be easily visually recognized. Note that, the relationship between the incident angle on the outermost surface layer and the reflectance in the outermost surface layer in consideration of the Brewster's angle is as shown in Fig. 7.

<6-2>
In the windshield, a second HUD device that projects light to an area through which light from the outside passes can be used. The second HUD device can be caused to display information that does not need to be superimposed and displayed on an object of the outside view and information that needs to be superimposed and displayed on the object of the outside view. The information that does not need to be superimposed and displayed on the object of the outside view is, for example, information indicating an operation status such as a fuel gauge, a water temperature gauge, a direction indicator, a headlight, opening/closing of a door, and an ADAS function and a state of the automobile such as a warning light, information around the automobile such as a back monitor, car navigation information such as an azimuth indicator, a map, a distance to a destination, and an estimated arrival time, and audio information such as audio operation and music during being reproduced.

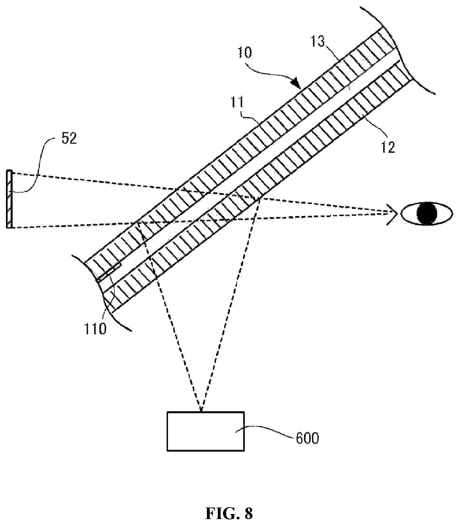

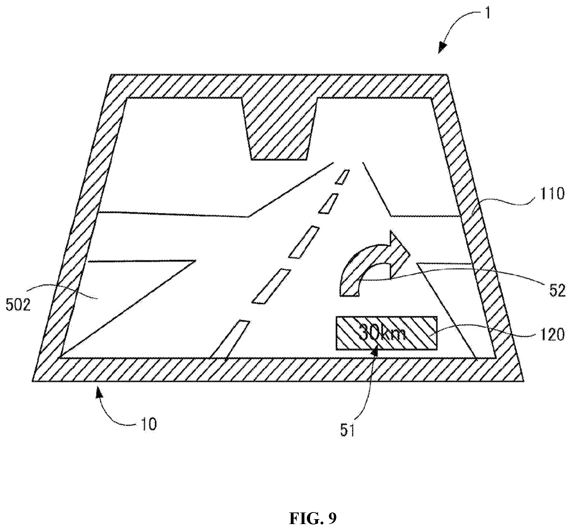

Meanwhile, the information that needs to be superimposed and displayed on the object of the outside view is, for example, navigation information such as a position of a corner to turn and an instruction of lane change, and information on an object to be noted such as a pedestrian, a bicycle, or a motorcycle. In order to display such information, an HUD device having an AR function (referred to as an AR-HUD device) can also be used. As illustrated in Fig. 8, an AR-HUD device 600 causes a second image 52 to be displayed on the windshield as a virtual image, in addition to projecting an image on the windshield described above. Here, for convenience of description, an image by light from the normal HUD device 500 will be referred to as a first image 51, and an image by light from the AR-HUD device 600 will be referred to as the second image 52. The second image 52 is an image for augmented reality (AR) display, and is displayed so as to be superimposed on an object included in the outside view. The object is included in the outside view seen through the laminated glass 10, and is, for example, a road, a building, a pedestrian, a vehicle ahead, a road sign, or the like. The second image 52 is a figure such as an arrow or a character as illustrated in Fig. 9, and is displayed so as to be superimposed on a road of an outside view in this example. That is, the first image 51 is displayed so as to be formed on an object at a position approximately 3 m or more away from the driver's eyes. The first image 51 is movable together with the object so as to be relatively fixed to the object when viewed from the driver. Therefore, the relative positional relationship among the driver's eyes, a specific object in the outside view, and the first image 51 is continuously maintained. Therefore, the shape of the first image 51 may be continuously updated at a predetermined cycle in accordance with the relative position and shape of the specific object. An area of the laminated glass 10 on which such a first image 51 is projected is an area different from the first shield layer 110 and the second shield layer 120 described above.

In this case, the reflectance of the area on which the first image 51 is displayed can be made larger than the reflectance of the area on which the second image 52 is displayed. This is because the second image 52 is displayed in superposition with the transmitted light (outside view) from the outside of the vehicle, and thus, it is difficult to visually recognize the second image when the reflection inside the vehicle increases due to reflecting. On the other hand, since the first image 51 is displayed at a position corresponding to the second shield layer 120, the influence of reflection is small.

<6-3>
When the first shield layer 110 disposed on the peripheral edge of the windshield is disposed on the surface on the vehicle interior side of the inner glass plate 12, application of an adhesive or the like to the first shield layer 110 facilitates attachment of the windshield to the vehicle body. From this viewpoint, the first shield layer 110 is preferably disposed at least on the surface on the vehicle interior side of the inner glass plate 12. In this case, when the reflective film 7 is applied onto the first shield layer 110, there is a possibility that the adhesive force with the vehicle body is reduced, and thus, the reflective film 7 is preferably disposed at a place where the first shield layer 110 is not provided (or a part on the first shield layer 110). In particular, when a film with a reflective film including a film substrate and the reflective film 7 formed on the film substrate is used, and the film substrate is attached onto the first shield layer 110 by a transparent adhesive layer, there is a concern about a decrease in adhesive force between the windshield and the vehicle body.

<6-4>
When the first shield layer 110 and the second shield layer 120 are disposed on the same surface of any of the glass plates 11 and 12, both the shield layers can be connected to each other. As a result, the first shield layer 110 and the second shield layer 120 can be formed by one printing.

<6-5>
The glossiness can be adjusted instead of the reflectance. That is, the second shield layer 120 is formed on the surface on the vehicle interior side of the outer glass plate 11 or the surface on the vehicle exterior side of the inner glass plate 12, and the glossiness of the second shield layer 120 can be made lower than the glossiness of the first shield layer 110. For example, even when the first shield layer 110 and the second shield layer 120 are on the same plane of any of the glass plates 11 and 12, the glossiness can be made different as described above.

When the glossiness of the second shield layer 120 is lower than that of the first shield layer 110, the diffuse reflection becomes large, and reflection at the second shield layer 120 is relatively stronger than reflection at the first shield layer 110, so that a double image can be suppressed. In particular, when the second shield layer 120 is disposed on the vehicle interior side of the inner glass plate 12, reflection on the outermost surface on the vehicle interior side of the windshield becomes strong, which is preferable. When the shield layers 110 and 120 are formed of ceramics, the firing temperature may be increased in order to improve glossiness. That is, the glossiness can be controlled by adjusting the temperature distribution during firing. By using a material having a high melting point of ceramics, the glossiness can be lowered.

### Reference Signs List

- 10: Laminated glass
- 11: Outer glass plate
- 12: Inner glass plate
- 13: Intermediate film
- 110: First shield layer
- 120: Second shield layer

## Claims

1. A windshield on which at least information pertaining to an automobile is projected by light emitted from a head-up display device disposed on a vehicle interior side, the windshield comprising:
an outer glass plate;
an inner glass plate facing the outer glass plate;
an intermediate film bonding the inner glass plate and the outer glass plate;
a first shield layer disposed at a peripheral edge of at least one of the outer glass plate and the inner glass plate; and
a second shield layer disposed in an area on an inner side of the first shield layer, in at least one of the outer glass plate and the inner glass plate, the information pertaining to the automobile being projected on the second shield layer.

2. The windshield according to claim 1, wherein
an upper end of the second shield layer is disposed
below a reduced test area B defined in JIS R3212 (2021) JA.1.1.4b or
below a position of 25 mm from a lower end of an enlarged test area B defined in JIS R3212 (2021) JA.1.1.4b.

3. The windshield according to claim 1, wherein
the first shield layer is disposed at least on a surface on the vehicle interior side of the inner glass plate out of a surface on the vehicle interior side of the outer glass plate and the surface on the vehicle interior side of the inner glass plate, and
the second shield layer is disposed at least on a surface other than the surface on the vehicle interior side of the inner glass plate.

4. The windshield according to claim 1, wherein
the first shield layer is disposed at least on a surface on the vehicle interior side of the inner glass plate out of a surface on the vehicle interior side of the outer glass plate and the surface on the vehicle interior side of the inner glass plate, and
the first shield layer is disposed at least on a plane which is same as the surface on which the second shield layer is disposed.

5. The windshield according to claim 1, wherein the first shield layer and the second shield layer are connected.

6. The windshield according to claim 1 or 2, wherein the second shield layer is disposed on a surface on the vehicle interior side of the outer glass plate.

7. The windshield according to claim 6, wherein a reflective film is disposed on a surface on the vehicle interior side of the inner glass plate.

8. The windshield according to claim 7, wherein a difference between a refractive index of the inner glass plate and a refractive index of the intermediate film overlapping the second shield layer is larger than a difference between a refractive index of the intermediate film overlapping the second shield layer and a refractive index of the second shield layer.

9. The windshield according to claim 7, wherein the reflective film covers at least a part of the second shield layer.

10. The windshield according to claim 1 or 2, wherein the information pertaining to an automobile includes at least one of a speedometer and an odometer.

11. The windshield according to claim 1 or 2, wherein the second shield layer is disposed on a lower side when the windshield is attached to a vehicle.

12. The windshield according to claim 1 or 2, wherein the light is P-polarized light.

13. The windshield according to claim 12, wherein one or more reflective films are disposed on a surface on the vehicle interior side of the inner glass plate, and
when an incident angle of the light emitted from the head-up display device is larger than a Brewster's angle in the inner glass plate, a refractive index of an outermost surface layer of the reflective film is smaller than a refractive index of the inner glass plate.

14. The windshield according to claim 12, wherein
one or more reflective films are disposed on a surface on the vehicle interior side of the inner glass plate, and
when an incident angle of the light emitted from the head-up display device is smaller than a Brewster's angle in the inner glass plate, a refractive index of an outermost surface layer of the reflective film is larger than a refractive index of the inner glass plate.

15. The windshield according to claim 1 or 2, wherein an irradiation area to be irradiated with light from a second head-up display device is provided, the light being projected onto an area in which the first shield layer and the second shield layer are not provided and on which external light is transmitted and incident.

16. The windshield according to claim 15, wherein a reflectance of the irradiation area is smaller than a reflectance of an area in which the first shield layer and the second shield layer are provided, on the vehicle interior side of the inner glass plate.

17. The windshield according to claim 1 or 2, wherein
the second shield layer is formed on a surface on the vehicle interior side of the outer glass plate or a surface on a vehicle exterior side of the inner glass plate, and
glossiness of the second shield layer is lower than glossiness of the first shield layer.
